# EUROPEAN PATENT APPLICATION

(11) **EP 3 425 879 A1**
(43) Date of publication of application: **09.01.2019**
(21) Application number: 18180258.8
(22) Date of filing: 27.06.2018
(51) Int. Cl.: H04L 29/08, H04L 29/06, B64D 45/00

(54) **EXTENSIBLE FLIGHT MANAGEMENT SYSTEMS AND METHODS**

(30) Priority: 07.07.2017 US 201715644501
(71) Applicant: Honeywell International Inc., Morris Plains, NJ New Jersey 07950 (US)
(72) Inventor: PEARSON, Mark, Morris Plains, New Jersey 07950 (US); MCCULLOUGH, Susan, Morris Plains, New Jersey 07950 (US); TOEWS, Phillip, Morris Plains, New Jersey 07950 (US); WISNER, Todd, Morris Plains, New Jersey 07950 (US); DAIRMAN, Charles, Morris Plains, New Jersey 07950 (US)
(74) Representative: Houghton, Mark Phillip

(57) **Abstract**

Aircraft systems and related methods are provided for extensible flight management capabilities. One exemplary system includes a multifunction computing module including a user interface, a first processing system, and a first communications interface supporting a first data characteristic, and a flight management computing module. The flight management computing module includes at least one avionics interface to receive operational data from an avionics system onboard an aircraft and having a second data characteristic different from the first data characteristic, a second communications interface communicatively coupled to the first communications interface to the multifunction computing module, and a second processing system coupled to the avionics interface and the second communications interface to convert the operational data to input data having the first data characteristic and provide the input data to the multifunction computing module.

## Description

### TECHNICAL FIELD

The subject matter described herein relates generally to avionics systems, and more particularly, embodiments of the subject matter relate to reusing existing avionics to support cockpit upgrades.

### BACKGROUND

Once the electronic systems are installed in a vehicle, they can be difficult to modify or replace. In particular, retrofitting an aircraft often entails costly hardware upgrades, wiring upgrades, hull changes, and potentially other modifications to integrate newer systems. Often, cockpits also have limited space available to accommodate upgrades. Thus, in many instances, upgrading the flight management system (FMS) in older cockpits is cost prohibitive, thereby depriving those aircraft of modern flight management functionality which could otherwise improve operational safety and/or performance, such as, for example, required navigation performance (RNP), localizer performance with vertical guidance (LPV) approach functionality, and the like. Accordingly, it is desirable to upgrade existing aircraft to support modern functionality in a manner that is not cost prohibitive. Other desirable features and characteristics will become apparent from the subsequent detailed description and the appended claims, taken in conjunction with the accompanying drawings and the foregoing technical field and background.

### BRIEF SUMMARY

Aircraft systems and related methods for using a multifunction computing module to provide flight management functionality are provided. In one embodiment, an aircraft system includes a multifunction computing module including a user interface, a first processing system, and a first communications interface supporting a first data characteristic, and a flight management computing module. The flight management computing module includes an avionics interface to receive operational data from an avionics system onboard an aircraft that has a second data characteristic different from the first data characteristic (e.g., a different data format, data rate, and/or the like), a second communications interface communicatively coupled to the first communications interface, and a second processing system coupled to the avionics interface and the second communications interface to convert the operational data to input data having the first data characteristic and provide the input data to the multifunction computing module at the second communications interface.

In another embodiment, a method of utilizing a multifunction computing module with an aircraft is provided. The method involves a flight management computer (FMC) onboard the aircraft obtaining aircraft status data from one or more onboard systems at one or more interfaces, converting the aircraft status data to have a different data characteristic, providing the converted aircraft status data at a communications interface communicatively coupled to the multifunction computing module, receiving flight management data influenced by the aircraft status data from the multifunction computing module at the communications interface, converting the flight management data to have a different data characteristic and providing the converted flight management data to one or more onboard systems at one or more of the one or more interfaces of the FMC.

In another embodiment, an apparatus for a flight management computing module is provided. The flight management computing module includes an avionics interface to receive operational data from an avionics system onboard an aircraft in a first format, a communications interface supporting a second format different from the first format, a processing system coupled to the avionics interface and the communications interface, and a data storage element having instructions stored thereon that are executable by the processing system to provide a data concentrator configured to convert the operational data from the first format to the second format and provide the converted operational data to the communications interface.

Furthermore, other desirable features and characteristics of the method and system will become apparent from the subsequent detailed description and the appended claims, taken in conjunction with the accompanying drawings and the preceding background.

### BRIEF DESCRIPTION OF THE DRAWINGS

The present invention will hereinafter be described in conjunction with the following figures, wherein like numerals denote like elements, and wherein:
FIG. 1 is a block diagram illustrating an aircraft system in accordance with one or more exemplary embodiments; and
FIG. 2 is a flow diagram illustrating a data communications process suitable for implementation by the aircraft system of FIG. 1 in accordance with one or more exemplary embodiments.

### DETAILED DESCRIPTION

The following detailed description is merely exemplary in nature and is not intended to limit the subject matter of the application and uses thereof. Furthermore, there is no intention to be bound by any theory presented in the preceding background, brief summary, or the following detailed description.

Embodiments of the subject matter described herein relate to updating or upgrading vehicle systems by reconfiguring an existing module to support a new module to be integrated, incorporated, or otherwise instantiated for interoperability and use with other existing components of the vehicle system. For purposes of explanation, the subject matter is described herein primarily in the context of aircraft, however, the subject matter is not necessarily limited to use with aircraft and may be implemented in an equivalent manner for other types vehicles (e.g., automotive vehicles, marine vessels, or the like).

In exemplary embodiments, an existing flight management computer (FMC) (or flight management system (FMS)) onboard an aircraft is utilized to communicate data between existing onboard avionics systems or line-replaceable units (LRUs) and another module coupled to the FMC, which supports or otherwise performs new flight management functionality that is not performed by the FMC. For example, a multifunction control and display unit (MCDU) may support or otherwise perform new flight management functionality based on data from onboard avionics or LRUs received via the FMC. In this regard, the FMC is configured to receive operational or status data from one or more avionics systems or LRUs onboard the aircraft at corresponding avionics interfaces and convert one or more characteristics of the operational data to support communicating the operational data with the MCDU. For purposes of explanation, the subject matter may primarily be described herein in the context of converting operational data received from onboard avionics or LRUs in a first format (e.g., an avionics bus format) into another format supported by the interface with the MCDU, the subject matter described herein is not necessarily limited to format conversions or digital reformatting, and may be implemented in an equivalent manner for converting between other data characteristics, such as, for example, different data rates, throughputs or bandwidths, different sampling rates, different resolutions, different data compression ratios, and the like.

In one or more exemplary embodiments, the FMC converts the received data from the format or protocol associated with a respective avionics interface into a different format or protocol associated with the interface coupled to the MCDU, and then transmits or otherwise provides the converted operational or status data to the MCDU via the corresponding interface. Flight management modules or algorithms supported by the MCDU process the received operational data to generate flight management data or commands that achieve the flight management functionality supported by the MCDU, such as, for example, flight plan modifications, trajectories, or other commands for navigating or operating the aircraft. The MCDU transmits the generated flight management data to the FMC. The FMC converts the flight management data or commands from the format or protocol associated with the MCDU interface into a different format or protocol associated with the avionics interface for the destination avionics or LRU, and then transmits the converted flight management data to the intended avionics or LRU, which then executes or otherwise processes the data to operate in accordance with the flight management functionality supported by the MCDU.

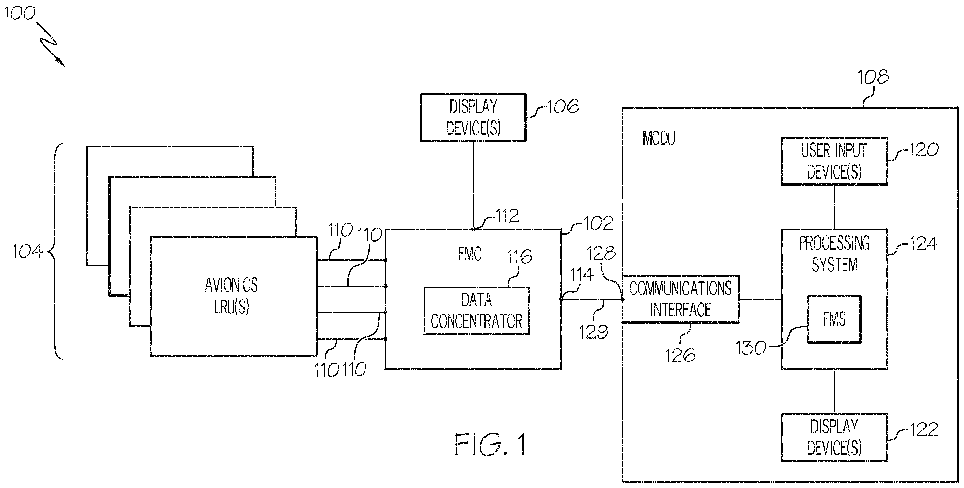

FIG. 1 depicts an exemplary embodiment of an aircraft system 100 suitable for implementation onboard an aircraft. The illustrated aircraft system 100 includes a flight management computing module 102 communicatively coupled to a plurality of onboard avionics LRUs 104, one or more display devices 106, and a multifunction computing module 108. It should be appreciated that FIG. 1 depicts a simplified representation of the aircraft system 100 for purposes of explanation, and FIG. 1 is not intended to limit the subject matter in any way.

The flight management computing module 102 generally represents the FMC, the FMS, or other legacy hardware, circuitry, logic, firmware and/or other components installed onboard the aircraft and traditionally configured to perform various tasks, functions and/or operations pertaining to flight management, flight planning, flight guidance, flight envelope protection, four-dimensional trajectory generation or required time of arrival (RTA) management, and the like. Accordingly, for purposes of explanation, but without limiting the functionality performed by or supported at the flight management computing module 102, the flight management computing module 102 may alternatively be referred to herein as the FMC. The FMC 102 includes a plurality of interfaces 110 configured to support communications with the avionics LRUs 104 along with one or more display interfaces 112 configured to support coupling one or more display devices 106 to the FMC 102. In the illustrated embodiment, the FMC 102 also includes a communications interface 114 that supports coupling the multifunction computing module 108 to the FMC 102.

The FMC 102 generally includes a processing system designed to perform legacy flight management functions, and potentially other legacy functions pertaining to flight planning, flight guidance, flight envelope protection, and the like. Depending on the embodiment, the processing system could be realized as or otherwise include one or more processors, controllers, application specific integrated circuits, programmable logic devices, discrete gate or transistor logics, discrete hardware components, or any combination thereof. The processing system of the FMC 102 generally includes or otherwise accesses a data storage element (or memory), which may be realized as any sort of non-transitory short or long term storage media capable of storing programming instructions for execution by the processing system of the FMC 102. In exemplary embodiments, the data storage element stores or otherwise maintains code or other computer-executable programming instructions that, when read and executed by the processing system of the FMC 102, cause the FMC 102 to implement, generate, or otherwise support a data concentrator application 116 that performs certain tasks, operations, functions, and processes described herein.

The avionics LRUs 104 generally represent the electronic components or modules installed onboard the aircraft that support navigation, flight planning, and other aircraft control functions in a conventional manner and/or provide real-time data and/or information regarding the operational status of the aircraft to the FMC 102. For example, practical embodiments of the aircraft system 100 will likely include one or more of the following avionics LRUs 104 suitably configured to support operation of the aircraft: a weather system, an air traffic management system, a radar system, a traffic avoidance system, an autopilot system, an autothrottle (or autothrust) system, a flight control system, hydraulics systems, pneumatics systems, environmental systems, electrical systems, engine systems, trim systems, lighting systems, crew alerting systems, electronic checklist systems, and/or another suitable avionics system.

In exemplary embodiments, the avionics interfaces 110 are realized as different ports, terminals, channels, connectors, or the like associated with the FMC 102 that are connected to different avionics LRUs 104 via different wiring, cabling, buses, or the like. In this regard, the interfaces 110 may be configured to support different communications protocols or different data formats corresponding to the respective type of avionics LRU 104 that is connected to a particular interface 110. For example, the FMC 102 may communicate navigation data from a navigation system via a navigation interface 110 coupled to a data bus supporting the ARINC 424 (or A424) standard, the ARINC 629 (or A629) standard, the ARINC 422 (or A422) standard, or the like. As another example, a datalink system or other communications LRU 104 may utilize an ARINC 619 (or A619) compatible avionics bus interface for communicating datalink communications or other communications data with the FMC 102.

The display device(s) 106 generally represent the electronic displays installed onboard the aircraft in the cockpit, and depending on the embodiment, could be realized as one or more monitors, screens, liquid crystal displays (LCDs), a light emitting diode (LED) displays, or any other suitable electronic display(s) capable of graphically displaying data and/or information provided by the FMC 102 via the display interface(s) 112. Similar to the avionics interfaces 110, the display interfaces 112 are realized as different ports, terminals, channels, connectors, or the like associated with the FMC 102 that are connected to different cockpit displays 106 via corresponding wiring, cabling, buses, or the like. In one or more embodiments, the display interfaces 112 are configured to support communications in accordance with the ARINC 661 (or A661) standard. In one embodiment, the FMC 102 communicates with a lateral map display device 106 using the ARINC 702 (or A702) standard.

In exemplary embodiments, the multifunction computing module 108 is realized as a multifunction control and display unit (MCDU) that includes one or more user interfaces, such as one or more input devices 120 and/or one or more display devices 122, a processing system 124, and a communications module 126. The MCDU 108 generally includes at least one user input device 120 that is coupled to the processing system 124 and capable of receiving inputs from a user, such as, for example, a keyboard, a key pad, a mouse, a joystick, a directional pad, a touchscreen, a touch panel, a motion sensor, or any other suitable user input device or combinations thereof. The display device(s) 122 may be realized as any sort of monitor, screen, LCD, LED display, or other suitable electronic display capable of graphically displaying data and/or information under control of the processing system 124.

The processing system 124 generally represents the hardware, circuitry, logic, firmware and/or other components of the MCDU 108 configured to perform the various tasks, operations, functions and/or operations described herein. Depending on the embodiment, the processing system 124 may be implemented or realized with a general purpose processor, a microprocessor, a controller, a microcontroller, a state machine, an application specific integrated circuit, a field programmable gate array, any suitable programmable logic device, discrete gate or transistor logic, discrete hardware components, or any combination thereof, designed to perform the functions described herein. Furthermore, the steps of a method or algorithm described in connection with the embodiments disclosed herein may be embodied directly in hardware, in firmware, in a software module executed by the processing system 124, or in any practical combination thereof. In this regard, the processing system 124 includes or accesses a data storage element (or memory), which may be realized using any sort of non-transitory short or long term storage media, and which is capable of storing code or other programming instructions for execution by the processing system 124. In exemplary embodiments described herein, the code or other computer-executable programming instructions, when read and executed by the processing system 124, cause the processing system 124 to implement or otherwise generate a flight management system application 130 and perform additional tasks, operations, functions, and processes described herein.

The communications module 126 generally represents the hardware, module, circuitry, software, firmware and/or combination thereof that is coupled between the processing system 124 and a communications interface 128 of the MCDU 108 and configured to support communications between the MCDU 108 and the FMC 102 via an electrical connection 129 between the MCDU communications interface 128 and the FMC communications interface 114. For example, in one embodiment, the communications module 126 is realized as an Ethernet card or adapter configured to support communications between the FMC 102 and the MCDU 108 via an Ethernet cable 129 provided between Ethernet ports 114, 128. In other embodiments, the communications module 126 is configured to support communications between the FMC 102 and the MCDU 108 in accordance with the ARINC 429 (A429) standard via an A429 data bus 129 provided between A429 ports 114, 128 of the respective modules 102, 108. In yet other embodiments, the communications module 126 is configured to support communications between the FMC 102 and the MCDU 108 in accordance with the ARINC 422 (A422) standard via an A422 data bus 129 provided between A422 ports 114, 128 of the respective modules 102, 108. In yet other embodiments, the communications module 126 is configured to support communications between the FMC 102 and the MCDU 108 in accordance with the ARINC 739 (A739) standard via an A739 data bus 129 provided between A739 ports 114, 128 of the respective modules 102, 108.

In various embodiments, the FMC 102 and MCDU 108 communicate using a different communications protocol or standard than one or more of the avionics LRUs 104 and/or the display devices 106. In such embodiments, to support communications of data between the MCDU 108 and those LRUs 104 and/or display devices 106, the data concentrator application 116 at the FMC 102 converts data from one format to another before retransmitting or relaying that data to its destination. For example, the data concentrator application 116 may convert data received from an avionics LRU 104 to the A429 or Ethernet format before providing the data to the MCDU 108, and vice versa. Additionally, in exemplary embodiments, the FMC 102 validates the data received from an avionics LRU 104 before transmitting the data to the MCDU 108. For example, the FMC 102 may perform debouncing, filtering, and range checking, and/or the like prior to converting and retransmitting data from an avionics LRU 104.

It should be noted that although the subject matter may be described herein in the context of the multifunction computing module 108 being realized as an MCDU, in alternative embodiments, the multifunction computing module 108 could be realized as an electronic flight bag (EFB) or other mobile or portable electronic device. In such embodiments, an EFB capable of supporting a FMS application 130 may be connected to a legacy onboard FMC 102 using an Ethernet cable 129 to support flight management functionality from the EFB in an equivalent manner as described herein in the context of the MCDU.

In one or more embodiments, the MCDU 108 stores or otherwise maintains programming instructions, code, or other data for programming the FMC 102 and transmits or otherwise provides the programming instructions to the FMC 102 to update or otherwise modify the FMC 102 to implement the data concentrator application 116. For example, in some embodiments, upon establishment of the connection 129 between modules 102, 108, the MCDU 108 may automatically interact with the FMC 102 and transmit or otherwise provide the programming instructions to the FMC 102, which, in turn, executes the instructions to implement the data concentrator application 116. In some embodiments, the data concentrator application 116 may be implemented in lieu of legacy flight management functionality by the MCDU 108 reprogramming the FMC 102. In other embodiments, the FMC 102 may support the data concentrator application 116 in parallel with legacy flight management functions. In this regard, the FMC 102 may perform legacy flight management functions, while the FMS application 130 on the MCDU 108 supplements the legacy flight management functions to provide upgraded flight management functionality within the aircraft system 100.

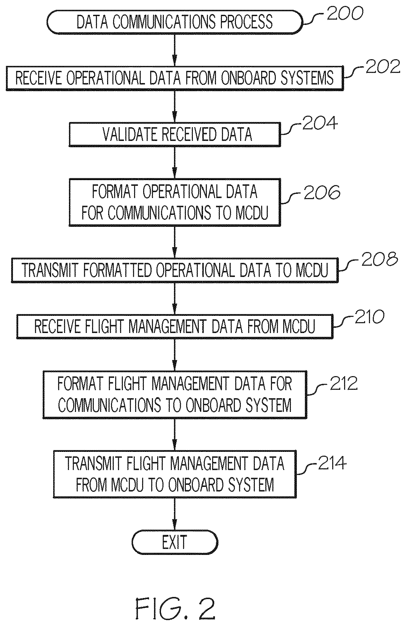

FIG. 2 depicts an exemplary embodiment of a data communications process 200 suitable for implementation in a vehicle system, such as the aircraft system 100 of FIG. 1. The various tasks performed in connection with the illustrated process 200 may be implemented using hardware, firmware, software executed by processing circuitry, or any combination thereof. For illustrative purposes, the following description may refer to elements mentioned above in connection with FIG. 1. In practice, portions of the data communications process 200 may be performed by different elements of the aircraft system 100. That said, in exemplary embodiments, the data communications process 200 is implemented or otherwise performed by the data concentrator application 116 on the FMC 102. It should be appreciated that the data communications process 200 may include any number of additional or alternative tasks, the tasks need not be performed in the illustrated order and/or the tasks may be performed concurrently, and/or the data communications process 200 may be incoiporated into a more comprehensive procedure or process having additional functionality not described in detail herein. Moreover, one or more of the tasks shown and described in the context of FIG. 2 could be omitted from a practical embodiment of the data communications process 200 as long as the intended overall functionality remains intact.

The illustrated data communications process 200 begins by receiving or otherwise obtaining operational data or information from an onboard system, validating the received data, formatting or otherwise converting the operational data for communications with a multifunction computing module, and then transmitting the formatted operational data to the multifunction computing module (tasks 202, 204, 206, 208). In this regard, the FMC 102 receives or otherwise obtains operational data from an avionics LRU 104 that characterizes or quantifies the current operation or current status of the aircraft. In some embodiments, the MCDU 108 and/or the FMS application 130 may transmit or otherwise provide a request for a particular type of data to the FMC 102, wherein the data concentrator application 116 analyzes the request to identify the particular avionics LRU 104 capable of sourcing the data and then requests or otherwise retrieves the data from the LRU 104 via the avionics interface 110 associated with that particular LRU 104. In this regard, when there are multiple different potential sources of data, the data concentrator application 116 at the FMC 102 may utilize source selection logic to identify which LRU 104 the requested data should be retrieved from. The data concentrator application 116 obtains the operational data formatted in accordance with the particular communications protocol or standard supported by the avionics interface 110 from which the operational data is received and then performs one or more data validation operations on the operational data to verify the operational data is valid. In one embodiment, the data concentrator application 116 maintains a prioritized list of avionics LRUs 104 as potential sources for a particular type of data, and the data concentrator application 116 retrieves and retransmits only the data from the highest ranked LRU 104 that is currently providing valid data.

In exemplary embodiments, the data concentrator application 116 formats, transcodes, or otherwise converts the received operational data into a format corresponding to the communications protocol or standard supported by the communications interface 114 and then transmits or otherwise provides the reformatted operational data to the MCDU 108 via the MCDU interface 114. For example, the data concentrator application 116 may convert operational data from an avionics LRU 104 formatted in accordance with an ARINC standard into a format for retransmission over an Ethernet cable 129. The operational data received by the MCDU 108 may be utilized to generate or otherwise provide graphical representations of the current operational status of the aircraft on the display device 122. In exemplary embodiments, the MCDU 108 implements or otherwise provides a FMS application 130 that processes the operational data and provides response data for achieving the desired flight management functionality back to the FMC 102 or other onboard components 104, 106.

In the illustrated embodiment, the data communications process 200 continues by receiving or otherwise obtaining flight management data or information from the multifunction computing module, validating the received data, formatting or otherwise converting the flight management data for communications with another onboard component, and then transmitting the flight management data to that component (tasks 210, 212, 214). For example, the operational data received by the MCDU 108 via the interface 128 may be input or otherwise provided to a flight management algorithm performed by the FMS application 130 on the MCDU 108, which, in turn, analyzes or otherwise processes the operational data to provide flight management functionality responsive to the current operation of the aircraft. In this regard, the FMS application 130 may determine commands for operating or otherwise controlling onboard avionics 104 or generate data for presentation on a cockpit display 106. In some embodiments, the flight management data is also influenced by or otherwise responsive to one or more inputs received from the user input device(s) 120 in conjunction with the current operational data for the aircraft. The FMS application 130 formats the flight management data into the format corresponding to the communications protocol or standard supported by the interfaces 114, 128 and connection 129, and then transmits or otherwise provides the flight management data to the FMC 102.

The FMC 102 analyzes the received flight management data to identify the destination onboard components 104, 106, formats, transcodes, or otherwise converts the received flight management data into a format corresponding to the communications protocol or standard supported by the interface 110, 112 connected to the destination component 104, 106, and then transmits or otherwise provides the reformatted flight management data to the destination component 104, 106. For example, the data concentrator application 116 may identify an autothrottle command from the MCDU 108 and/or the FMS application 130, identify the communications protocol supported by the interface 110 connected to the autothrottle system 104, and then convert the autothrottle command from the format supported by the MCDU interface 114 into the format supported by the autothrottle interface 110 before transmitting the autothrottle command to the autothrottle system 104. As another example, the data concentrator application 116 may identify display commands or display data received from the MCDU 108 and/or the FMS application 130, convert the display commands from the format supported by the MCDU interface 114 into a format supported by the display interface 112 before transmitting the display command to the appropriate display 106 for presentation within the cockpit.

Referring to FIGS. 1-2, in accordance with one or more embodiments, the FMS application 130 on the MCDU 108 supports upgraded approach procedures, such as, a localizer performance with vertical guidance (LPV) approach. In such embodiments, the FMC 102 obtains localizer data from the instrument landing system (ILS) 104 onboard the aircraft, validates, formats, and then transmits the localizer data to the FMS application 130 on the MCDU 108. The MCDU 108 may include one or more satellite navigation receivers, global positioning system receivers, or the like that provide altitude data, with the FMS application 130 processing the altitude data and the localizer data to generate display data for executing the LPV approach. The MCDU 108 transmits or otherwise provides the LPV approach display data to the FMC 102, which, in turn, formats and then transmits LPV approach display data to a cockpit display device 106 for presentation within the cockpit on a glideslope display, or the like. Similarly, for automated approaches, the MCDU 108 processes the altitude data and the localizer data to generate actuator commands for executing the LPV approach to the FMC 102, which, in turn, formats and then transmits the actuator commands to the appropriate avionics LRU 104 for execution. Thus, an aircraft system 100 with a legacy FMC 102 may be upgraded to support a LPV approach or other modern aircraft procedures (e.g., precision approaches, departure procedures, arrival procedures, and the like) using navigational data or positional data obtained at the MCDU 108 and without requiring upgrades or modification to the legacy FMC 102, the onboard components 104, 106, or other aspects of the existing installation onboard the aircraft.

By virtue of the subject matter described herein, legacy aircraft may be upgraded or otherwise updated by utilizing the legacy FMC as a data concentrator that manages communications between existing or legacy onboard components and an upgraded component that provides upgraded flight management functionality. As described above, depending on the embodiment, the legacy FMC may retain performance of data validation, source selection, or legacy flight management functionality while transmitting operational data from onboard avionics to the upgraded component for providing upgrade flight management functionality. In this regard, the existing FMC, existing avionics LRUs, and existing wiring, cables, or buses there between do not require hardware modifications to support the upgraded functionality.

In exemplary embodiments, a MCDU including upgraded FMS functionality is connected to the legacy FMC, which communicates data between the MCDU and the existing onboard avionics LRUs and/or displays. In this regard, the MCDU providing upgraded functionality can be integrated into a legacy system using a single communications interface with the legacy FMC and does not need to be individually connected to the various other onboard systems. The MCDU can then perform upgraded flight planning, performance, or other flight management functionality at the MCDU based on data received from the FMC and provide corresponding flight management commands or data back to the FMC for retransmission to the desired destination system onboard the aircraft. In this regard, the MCDU may have more advanced hardware or computational capabilities than a legacy FMC, and support more complex flight management functionality with reduced computational time required. Accordingly, the subject matter described herein solves the problem of upgrading legacy aircraft to support modern or up-to-date flight management functionality without modifications to the existing wiring, cables, buses or other hardware already installed onboard the aircraft and without requiring replacement or upgrading of the existing FMC.

For the sake of brevity, conventional techniques related to flight management systems, avionics systems, avionics standards, avionics installations, retrofitting, communications protocols, encoding, formatting, and other functional aspects of the systems (and the individual operating components of the systems) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

The subject matter may be described herein in terms of functional and/or logical block components, and with reference to symbolic representations of operations, processing tasks, and functions that may be performed by various computing components or devices. It should be appreciated that the various block components shown in the figures may be realized by any number of hardware components configured to perform the specified functions. For example, an embodiment of a system or a component may employ various integrated circuit components, e.g., memory elements, digital signal processing elements, logic elements, look-up tables, or the like, which may cany out a variety of functions under the control of one or more microprocessors or other control devices. Furthermore, embodiments of the subject matter described herein can be stored on, encoded on, or otherwise embodied by any suitable non-transitory computer-readable medium as computer-executable instructions or data stored thereon that, when executed (e.g., by a processing system), facilitate the processes described above.

The foregoing description refers to elements or nodes or features being "coupled" together. As used herein, unless expressly stated otherwise, "coupled" means that one element/node/feature is directly or indirectly joined to (or directly or indirectly communicates with) another element/node/feature, and not necessarily mechanically. Thus, although the drawings may depict one exemplary arrangement of elements, additional intervening elements, devices, features, or components may be present in an embodiment of the depicted subject matter. In addition, certain terminology may also be used in the following description for the purpose of reference only, and thus are not intended to be limiting.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the subject matter in any way. Rather, the foregoing detailed description will provide those skilled in the art with a convenient road map for implementing an exemplary embodiment of the subject matter. It should be understood that various changes may be made in the function and arrangement of elements described in an exemplary embodiment without departing from the scope of the subject matter as set forth in the appended claims. Accordingly, details of the exemplary embodiments or other limitations described above should not be read into the claims absent a clear intention to the contrary.

## Claims

1. An aircraft system (100) comprising:
a first computing module including a user interface, a first processing system (124), and a first communications interface supporting a first data characteristic; and
a flight management computing module (102) including:
an avionics interface to receive operational data from an avionics system onboard an aircraft having a second data characteristic different from the first data characteristic;
a second communications interface communicatively coupled to the first communications interface; and
a second processing system (124) coupled to the avionics interface and the second communications interface to convert the operational data to input data having the first data characteristic and provide the input data to the first computing module at the second communications interface.

2. The aircraft system (100) of claim 1, wherein:
the first computing module comprises a multifunction control and display unit (MCDU) (108); and
the flight management computing module (102) comprises a flight management computer (FMC) (102).

3. The aircraft system (100) of claim 2, wherein:
the first communications interface comprises one of an A429 avionics bus interface, an A422 avionics bus interface, an A739 avionics bus interface, and an Ethernet interface; and
the second communications interface comprises one of an A424 avionics bus interface, an A629 avionics bus interface, an A619 avionics bus interface, an A661 avionics bus interface, and an A702 avionics bus interface.

4. The aircraft system (100) of claim 2, wherein the first processing system (124) of the MCDU (108) determines flight management data based at least in part on the input data and provides the flight management data to the FMC (102) at the first communications interface.

5. The aircraft system (100) of claim 4, wherein the second processing system (124) of the FMC (102) provides the flight management data to a second avionics system onboard the aircraft.

6. The aircraft system (100) of claim 4, wherein the second processing system (124) of the FMC (102) converts the flight management data from a first format to command data having a different format and provides the command data to a second avionics system onboard the aircraft at a second avionics interface.

7. The aircraft system (100) of claim 2, wherein:
the MCDU (108) comprises a receiver to provide navigational data; and
the first processing system (124) of the MCDU (108) determines flight management data based at least in part on the input data and the navigational data.

8. The aircraft system (100) of claim 7, wherein the navigational data comprises altitude data and the flight management data comprises a command for executing an aircraft procedure.

9. The aircraft system (100) of claim 1, wherein:
the flight management computing module (102) comprises a display interface (112) coupled to a display device (122) onboard the aircraft;
the first processing system (124) of the first computing module determines flight management data based at least in part on the input data and provides the flight management data to the flight management computing module (102) at the first communications interface; and
the second processing system (124) converts the flight management data from a first format to display data in a different format supported by the display interface (112) and provides the flight management data to the display device (122) at the display interface (112).

10. A method of utilizing a multifunction computing module (108) with an aircraft comprising one or more onboard systems coupled to one or more interfaces of a flight management computer (FMC) (102) onboard the aircraft, the method comprising:
obtaining, by the FMC (102), aircraft status data from the one or more onboard systems at the one or more interfaces, the aircraft status data having a first data characteristic;
converting, by the FMC (102), the aircraft status data to have a second data characteristic different from the first data characteristic;
providing, by the FMC (102), the converted aircraft status data at a communications interface communicatively coupled to the multifunction computing module (108);
receiving, by the FMC (102), flight management data influenced by the aircraft status data from the multifunction computing module (108) at the communications interface, the flight management data having the second data characteristic;
converting, by the FMC (102), the flight management data to have a different data characteristic; and
providing, by the FMC (102), the converted flight management data at one or more of the one or more interfaces of the FMC (102).

11. The method of claim 10, further comprising:
receiving, by the FMC (102) from the multifunction computing module (108), instructions executable by a processing system (124) of the FMC (102) to provide a data concentrator application (116); and
executing, by the processing system (124) of the FMC (102), the instructions to reprogram the FMC (102) to provide the data concentrator application (116) at the FMC (102).

12. The method of claim 10, wherein:
the multifunction computing module (108) comprises a multifunction control and display unit (MCDU) (108);
the flight management data comprises a flight management command determined by the MCDU (108); and
providing the converted flight management data comprises the FMC (102) providing a reformatted version of the flight management command to an avionics system onboard the aircraft for execution of the flight management command.

13. The method of claim 10, wherein:
the multifunction computing module (108) comprises a multifunction control and display unit (MCDU (108));
the flight management data comprises flight management display data determined by the MCDU (108); and
providing the converted flight management data comprises the FMC (102) providing a reformatted version of the flight management display data to a cockpit display (106) coupled to the FMC (102).

14. A flight management computing module (102) including:
an avionics interface to receive operational data from an avionics system onboard an aircraft in a first format;
a communications interface supporting a second format different from the first format;
a processing system (124) coupled to the avionics interface and the communications interface; and
a data storage element having instructions stored thereon that are executable by the processing system (124) to provide a data concentrator configured to convert the operational data from the first format to the second format and provide the converted operational data to the communications interface.

15. The flight management computing module (102) of claim 14, further comprising a second avionics interface coupled to a second avionics system onboard the aircraft, wherein the processing system (124) is coupled to the second avionics interface and the data concentrator receives flight management data from the communications interface in the second format, converts the flight management data to a different format, and provides the converted flight management data to the second avionics system at the second avionics interface.
